# EUROPÄISCHE PATENTSCHRIFT

(11) **EP 3 605 758 B1**
(45) Veröffentlichungstag und Bekanntmachung des Hinweises auf die Patenterteilung: **14.04.2021**
(21) Anmeldenummer: 18187192.2
(22) Anmeldetag: 03.08.2018
(51) Int. Cl.: H02B 3/00, H02B 1/20, H02B 1/32

(54) **EINRICHTUNG UND VERFAHREN ZUM PRÜFEN EINES SCHALTSCHRANKINHALTS NACH PLANUNGSBASIERTER MONTAGE**
DEVICE AND METHOD FOR TESTING THE CONTENT OF A CONTROL CABINET AFTER PLANNING-BASED INSTALLATION
DISPOSITIF ET PROCÉDÉ DE VÉRIFICATION D'UN CONTENU D'ARMOIRE DE DISTRIBUTION APRÈS UN MONTAGE PLANIFIÉ

(43) Veröffentlichungstag der Anmeldung: 05.02.2020
(73) Patentinhaber: Rittal GmbH & Co. KG, 35745 Herborn (DE)
(72) Erfinder: WEICHSEL, Thomas, 41812 Erkelenz (DE); MICHELS, Thomas, 53842 Troisdorf (DE); MARTIN, Lars, 35516 Münzenberg (DE); ZACHRAI, Judith, 35745 Herborn (DE)
(74) Vertreter: Kietzmann, Lutz

(56) Entgegenhaltungen:
- EP-A1- 3 016 221
- WO-A1-2016/202454
- WASENMULLER OLIVER ET AL: "Augmented Reality 3D Discrepancy Check in Industrial Applications", 2016 IEEE INTERNATIONAL SYMPOSIUM ON MIXED AND AUGMENTED REALITY (ISMAR), IEEE, 19. September 2016 (2016-09-19), Seiten 125-134, XP033023416, DOI: 10.1109/ISMAR.2016.15 [gefunden am 2016-12-12]

## Beschreibung

Die vorliegende Erfindung betrifft eine Einrichtung sowie ein Verfahren zum Prüfen eines Schaltschrankinhalts nach planungsbasierter Montage von gerätetechnischen Komponenten sowie deren Verdrahtung über hierfür vorgesehene Klemmstellen mittels gekennzeichneter elektrischer Leitungen. Ferner betrifft die Erfindung auch ein dieses Verfahren verkörperndes Computerprogrammprodukt.

Das Einsatzgebiet der Erfindung erstreckt sich auf die Schaltschranktechnik. Schaltschränke werden vornehmlich im Rahmen industrieller Anwendungen genutzt. Ein Schaltschrank der hier interessierenden Art beherbergt gerätetechnische Komponenten, welche gewöhnlich in Form normierter elektrischer oder elektronischer Einbaumodule ausgebildet sind. Diese gerätetechnischen Komponenten dienen vornehmlich der Ansteuerung einer automatisierten Fertigungsanlage, einer verfahrenstechnischen Anlage, einer Werkzeugmaschine oder dergleichen. Bei den im Schaltschrank konzentriert untergebrachten Einbaumodulen handelt es sich meist also um gerätetechnische Komponenten, die nicht als Feldgeräte direkt an der Maschine angeordnet sind. Als gerätetechnische Komponenten im Sinne der vorliegenden Anmeldung kommen beispielsweise speicherprogrammierbare Steuerungen, universelle Recheneinheiten, Frequenzumrichter für Drehzahlsteuerungen, Kommunikationsmodule für Busanbindungen zu unterschiedlichen Bussystemen, digitale Eingangs-/Ausgangs-Module oder auch analoge Eingangsmodule zum Einsatz. Neben diesen elektronischen Komponenten enthält ein Schaltschrank üblicherweise auch rein elektrische Komponenten, beispielsweise elektrische Klemmleisten zum Anschluss der elektrischen Verkabelung am Einsatzort, womit die Verbindung zur Stromversorgung und zu den anzusteuernden Maschinen hergestellt wird. Die Fertigung eines Schaltschranks mit anwendungsspezifischem Schaltschrankinhalt erfolgt auf Basis eines elektrischen Schaltplans, aus welchem im Planungsstadium ein Planungslayout abgeleitet wird, welchem neben Informationen über die Positionierung der einzelnen gerätetechnischen Komponenten und deren Verdrahtung auch dazugehörige Stücklisteninformationen zugeordnet sind.

Eine solche Planung und Konstruktion des Schaltschrankinhalts wird heutzutage softwarebasiert, beispielsweise durch EPLAN Pro Panel® erstellt, das unter anderem auch ein dreidimensionales Planungslayout bereitstellt. Das Planungslayout enthält neben den gerätetechnischen Komponenten auch deren Verdrahtung über die an den Komponenten hierfür vorgesehenen Klemmstellen sowie Informationen über die Art und den Verlauf der zu verwendenden elektrischen Leitungen. Außerdem enthält das Planungslayout auch eine auf die Komponenten abgestimmte Konfiguration von Kupferschienen und dergleichen für flexible Stromverteilersysteme. Sind die gerätetechnischen Komponenten in Form von elektrischen oder elektronischen Einbaumodulen ausgeführt, so können diese beispielsweise über Hutschienen auf einer Montageplatte des Schaltschranks befestigt werden. Zur Komplettierung des Schaltschranks können auch weitere optionale Komponenten, wie Ventilatoren, Lüfter, Filter, Wärmetauscher, Klimatisierungseinheiten, Innenbeleuchtungssysteme, Kabeleinführungen und dergleichen konzipiert und durch das Planungslayout abgebildet werden.

Nach vollzogener Planung, deren Ergebnis unter anderem ein Planungslayout des SOLL-Zustandes des Schaltschrankinhalts ist, erfolgt dessen Fertigung, die im Wesentlichen eine Montage der gerätetechnischen Komponenten gemäß Stückliste auf einer Montageplatte des Schaltschranks und deren Verdrahtung mittels elektrischer Leitungen gemäß Planungslayout umfasst. Dies erfolgt gewöhnlich in einer entsprechend ausgestatteten Elektrowerkstatt. Nach abgeschlossener Montage wird der Schaltschrankinhalt gewöhnlich durch qualifiziertes Fachpersonal geprüft und hinsichtlich von zumindest Teilfunktionalitäten, wie beispielsweise Leitungsdurchgänge, getestet. Eine derartig manuelle Prüfung des Schaltschrankinhalts nach Montage erfordert die Erstellung von nachweistauglichen Prüfungsprotokollen und ist - je nach Komplexität der miteinander verknüpften gerätetechnischen Komponenten - fehleranfällig.

Die WO 2016/202454 A1 offenbart ein Verfahren sowie eine Einrichtung zum Prüfen eines Schaltschrankinhalts im Rahmen der Montage durch Nutzung von Augmented-Reality-Technologie. Darüber hinaus lässt sich hiermit auch eine Endprüfung auf bauliche Konsistenz des Schaltschrankinhalts durchführen, also eine Prüfung dahingehend, ob der Ist-Zustand der vollständig montierten und verdrahteten Komponenten mit dem Soll-Zustand eines Planungslayouts übereinstimmt. Das Vergleichsergebnis kann als Fehlerstelle angezeigt werden, um eine unmittelbare Nacharbeit zu gewährleisten.

Die EP 3 016 221 A1 offenbart ein Verfahren und eine Einrichtung zum Auswählen einer passiven oder sparsamen Architektur eines Schaltschrankes und betrifft somit lediglich das Planungsstadium.

Der Fachartikel "Augmented-Reality 3D discrepancy check in industrial applications" (Autoren: Wasenmuller Oliver et al., Veröffentlichungsjahr: 2016, aus IEEE International Symposium on Mixed and Augmented Reality (ISMAR), Seiten 125 bis 134, XP033023416) offenbart technische Informationen hinsichtlich der Anwendung der Augmented-Reality-Technologie auf die Qualitätsprüfung industrieller Anlagen. Es werden spezielle Bildverarbeitungsalgorithmen zur Bilderkennung vorgeschlagen.

Es ist daher die Aufgabe der vorliegenden Erfindung, eine Einrichtung sowie ein Verfahren zum Prüfen eines Schaltschrankinhalts nach planungsbasierter Montage zu schaffen, welche/welches eine zuverlässige und zeiteffiziente Qualitätsprüfung auch komplexer Schaltschrankinhalte sicherstellt.

Die Aufgabe wird einrichtungstechnisch durch Anspruch 1 gelöst; verfahrenstechnisch wird die Aufgabe durch den hierzu korrespondierenden Anspruch 6 gelöst. Hinsichtlich eines das Verfahren verkörpernden Computerprogrammprodukts wird auf Anspruch 11 verwiesen. Die jeweils abhängigen Ansprüche geben vorteilhafte Weiterbildungen der Erfindung wieder. Die Erfindung schließt die technische Lehre ein, dass eine Einrichtung zum Prüfen eines Schaltschrankinhalts nach planungsbasierter Montage der gerätetechnischen Komponenten sowie deren Verdrahtung eine Kameraeinheit zur zumindest zweidimensionalen Bilderfassung der auf einer Montageplatte eines Schaltschranks vollständig montierten und verdrahteten Komponenten umfasst, eine Auswerteeinheit zur Durchführung eines Vergleichs zwischen einem auf der bildtechnischen Erfassung basierenden Abbildlayout des IST-Zustandes mit einem bereitgestellten Planungslayout des SOLL-Zustandes, und einer Ausgabeeinheit zur Bereitstellung des Prüfungsergebnisses über die zumindest bauliche Konsistenz des Schaltschranks für eine Beurteilung hinsichtlich Lieferfreigabe oder

Fehlerbehebung. Dabei führt die Auswerteeinheit den besagten Vergleich zumindest hinsichtlich folgender Kernkriterien durch:
a) einer Vollständigkeit und Lage der verbauten Komponenten,
b) der Belegung elektrischer Klemmanschlüsse,
c) der Verdrahtungsverläufe der elektrischen Leitungen
wobei die Auswerteeinheit optional auch eine tiefergehende Prüfung hinsichtlich folgender weiterer Prüfungskriterien durchführen kann:
d) Größe und Typ des gewählten Schaltschranks, und/oder
e) einer Richtigkeit der verwendeten Drahtarten der elektrischen Leitungen.

Der Vorteil der erfindungsgemäßen Lösung liegt insbesondere darin, dass eine manuelle Prüfung des Montageresultats des Schaltschranks weitgehend entfallen kann, wobei die über den erfindungsgemäßen Layoutvergleich durchgeführte automatisierte Prüfung einen weitaus geringeren Zeitaufwand erfordert. Die erfindungsgemäße Lösung geht von der Erkenntnis aus, dass das den SOLL-Zustand beschreibende Planungslayout, welches Ergebnis der vorausgegangenen konstruktiven Planung ist, mit nur geringfügigen Anpassungen geeignet ist, um auch einen dem Montageprozess nachgelagerten Qualitätsprüfungsschritt als Vergleichsmaßstab zu dienen. Hierdurch wird eine zuverlässige Prüfung des geplanten SOLL-Zustandes gegen den tatsächlich umgesetzten IST-Zustand unter Minimierung etwaiger Fehlereinflussfaktoren sichergestellt.

Dabei ist die Prüfung hinsichtlich einer Vollständigkeit und Lage der verbauten Komponenten dahingehend zu verstehen, dass nicht allein das Vorhandensein von elektrischen oder elektronischen Einbaumodulen und dergleichen geprüft wird, sondern auch deren Typ, welcher anhand der bildlichen Informationen identifizierbar ist und mit den Stücklisteninformationen zum Planungslayout in Bezug gesetzt wird. Ferner wird geprüft, ob alle Komponenten in der vorgesehenen Sollposition montiert sind, und ob Abstandsmaße eingehalten sind. Darüber hinaus beinhaltet die Prüfung hinsichtlich der Belegung elektrischer Klemmanschlüsse den Test, ob die gemäß Planungslayout zu belegenden Klemmanschlüsse der Komponenten überhaupt verdrahtet sind, wobei in tiefgehender Prüfung auch die Verdrahtungsverläufe der elektrischen Leitungen nachvollzogen werden. Sind diese teilweise durch Kabelkanäle oder einer Bündelung wegen Überdeckung einer bildlichen Nachverfolgung nicht zugänglich, so erkennt die Auswerteeinheit beispielsweise anhand der optisch erfassbaren Anfangs- und Endverlaufsabschnitte einer elektrischen Leitung und/oder über deren Kennzeichnung den höchstwahrscheinlichen Verdrahtungsverlauf, welcher - falls dieser mit den übrigen Verdrahtungsverläufen nicht im Widerspruch steht - als gegebener Verdrahtungsverlauf angenommen wird. Zur individuellen Kennzeichnung der einzelnen elektrischen Leitungen ist es darüber hinaus auch denkbar, diese mit einer Zeichencodierung - beispielsweise mit maschinenlesbaren Mustern - zu versehen, welche einer bildtechnischen Auswertung zugänglich sind. Darüber hinaus kann über die Bilderfassung mittels der Kameraeinheit auch geprüft werden, ob die für die elektrischen Leitungen verwendeten Drahtarten hinsichtlich des Leitungsmaterials, des Durchmessers sowie der Isolation den geplanten Vorgaben entsprechen. Ferner ist es auch denkbar, Größe und Typ des gewählten Schaltschranks mit den Planungsvorgaben zu vergleichen und insofern zu prüfen.

Gemäß einer die erfindungsgemäße Lösung verbessernden Maßnahme wird vorgeschlagen, dass die Auswerteeinheit für die Bildverarbeitung optische Filtermittel nutzt, mit denen eine grafische Abstraktion des per Kameraeinheit erfassten Abbildes des Layouts ermöglicht wird. Eine derartige grafische Abstraktion sollte in Richtung der Darstellung des Planungslayouts gehen, um über denselben oder einen ähnlichen Abstraktionsgrad der beiden Vergleichsobjekte eine hohe Ergebnissicherheit zu erzielen. Eine derartige grafische Abstraktion kann beispielsweise durch Umsetzung in ein stark kontrastiertes Schwarz/Weiß-Bild mit klarer Linienstruktur realisiert werden, in dem nur die vergleichsrelevanten Bildbestandteile enthalten sind. Etwaige Informationslücken lassen sich über hinlänglich bekannte Bildverbesserungsalgorithmen vervollständigen.

Vorzugsweise sollte die Kameraeinheit dazu eingerichtet sein, ein dreidimensionales Abbild des Layouts zu erstellen, also nicht allein ein zweidimensionales Abbild. Dies bietet den Vorteil, dass auch die Höhenlage der Komponenten sowie der Klemmstellen erfassbar sind und gegen das normalerweise ebenfalls dreidimensional vorliegende Planungslayout prüfbar sind. Somit erhält die erfindungsgemäße Lösung eine höhere Informationsdichte an Prüfungsdetails, so dass hierdurch die Prüfungsqualität weiter erhöht wird.

Neben einem rein bildlichen Vergleich besteht mit der erfindungsgemäßen Lösung darüber hinaus auch die Möglichkeit, einen SOLL-IST-Vergleich über das Labeling der Komponenten vorzunehmen. Denn jede Komponente trägt sichtbar eine gemäß geltender Normen vorgeschriebene Kennzeichnung.

Gemäß der Erfindung wird vorgeschlagen, dass die Auswerteeinheit neben der baulichen Konsistenz des Schaltschranks auch dessen funktionale Konsistenz durch Abgleich der von den Komponenten und deren Verbindungen über die elektrischen Leitungen entstehende Funktionalität mit einem dem Planungslayout zugeordneten elektrischen Schaltplan prüft. Diese funktionale Prüfung basiert auf der Erkenntnis, dass neben dem Planungslayout, welches vorzugsweise Informationen hinsichtlich der Anordnung der Komponenten und deren Verdrahtung liefert, auch der elektrische Schaltplan bekannt ist, welcher normalerweise die Eingangsinformation für die Layoutplanung ist. Andererseits ist über die Auswertung der baulichen Konsistenz durch Layoutvergleich bekannt, welche konkreten Komponenten wie miteinander verbunden sind, so dass hinsichtlich des IST-Zustandes hieraus auf den elektrischen Schaltplan zurückgeschlossen werden kann. Auf diese Weise ist ergänzend auch eine Prüfung der funktionalen Konsistenz des Schaltschrankinhalts möglich.

Hierauf aufbauend ist es darüber hinaus auch möglich, auf Basis der Informationen aus der baulichen und funktionalen Prüfung den Schaltschrankinhalt in ein simulationsfähiges Funktionsmodell umzuwandeln. Zu diesem Zweck ist erfindungsgemäß eine Simulationseinheit vorgesehen, welche auf Basis einer positiven baulichen und funktionalen Prüfung eine Simulation verschiedener Betriebszustände des Schaltschranks über einen definierten Zeitraum durchführen kann. Hierbei wird die Anschlusskonfiguration des Funktionsmodells, also die angeschlossenen Sensoren, Geräte, Maschinen und dcrglcichcn ebenfalls simuliert. Über die Simulation lassen sich Testergebnisse, beispielsweise hinsichtlich der Temperaturentwicklung im Schaltschrank bei verschiedenen Belastungsszenarios, gewinnen. Das Simulationsergebnis ermöglicht eine tiefere Qualitätsprüfung hinsichtlich der Planungsvorgaben.

Dabei braucht die Simulation nicht in unmittelbarem Zeitzusammenhang mit der bildtechnischen Prüfung des Schaltschrankinhalts durchgeführt werden. Üblicherweise werden speicherprogrammierbare Steuerungen erst nach kompletter Schaltschrankmontage mit der jeweiligen Software ausgerüstet, welche meist erst zu einem späteren Zeitpunkt vorhanden und damit bekannt ist. Die in dieser Steuerungssoftware hinterlegten Algorithmen können daher zum entsprechend späteren Zeitpunkt auch dem Simulationsmodell zur Verfügung gestellt werden, welches den Volltest des Schaltschranks inklusive Steuerungssoftware hinsichtlich der Gesamtfunktionalität durchführt. Demgegenüber kann zumindest ein Teiltest hinsichtlich der baulichen und funktionalen Konsistenz des Schaltschranks direkt nach abgeschlossener Montage erfolgen.

Darüber hinaus kann die erfindungsgemäße Lösung auch dahingehend weitergebildet werden, dass der Vergleich des IST-Zustandes gegenüber dem SOLL-Zustand unter Berücksichtigung von zulässigen Toleranzbereichen hinsichtlich der verbauten Komponenten, der verwendeten elektrischen Leitungen und/oder deren Einbau- bzw. Verlaufspositionen durchgeführt wird.

Hierdurch erfolgt der Gut-Schlecht-Vergleich unter Berücksichtigung von zulässigen Abweichungen. So kann auch eine Überprüfung hinsichtlich des Mindestabstandes zweier benachbarter Komponenten erfolgen, welche beispielsweise im Bereich zwischen 2 und 3 cm liegen soll. Auch kundenspezifische Planungsvorgaben hinsichtlich baulicher Randbedingungen lassen sich hierbei abbilden. Ferner wird vorgeschlagen, dass das Prüfungsergebnis über die zumindest bauliche Konsistenz des Schaltschranks in einer Archivdatenbank hinterlegt wird, um damit vorzugsweise eine virtuelle Schaltschrankmappe für den nach erfolgter Montage geprüften Schaltschrank geführt wird. Hierdurch kann eine herkömmliche Protokollierung des Prüfungsergebnisses, beispielsweise zu Zertifizierungszwecken, entfallen.

Vorzugsweise ist das erfindungsgemäße Verfahren zum Prüfen eines Schaltschrankinhalts nach vorausgegangener planungsbasierter Montage der Komponenten und deren Verdrahtung als Computerprogrammprodukt ausgeführt, dessen Programmcodemittel die einzelnen Verfahrensschritte auf der vorgenannten Auswerteeinheit durchführen. Dieses auf einem computerlesbaren Datenspeicher abspeicherbare Computerprogrammprodukt kann beispielsweise auf unterschiedlichen universell einsetzbaren lokalen Rechnern installiert werden oder als Serverlösung für Nutzer zur Verfügung gestellt werden.

Weitere die Erfindung verbessernde Maßnahmen werden nachstehend gemeinsam mit der Beschreibung eines bevorzugten Ausführungsbeispiels der Erfindung anhand der Figuren näher dargestellt. Es zeigt:
- Fig. 1: eine schematische Blockschaltbilddarstellung einer Einrichtung zum Prüfen eines Schaltschrankinhalts, und
- Fig. 2: einen Ablaufplan einzelner Schritte des mit dieser Einrichtung auszuführenden Prüfungsverfahrens.

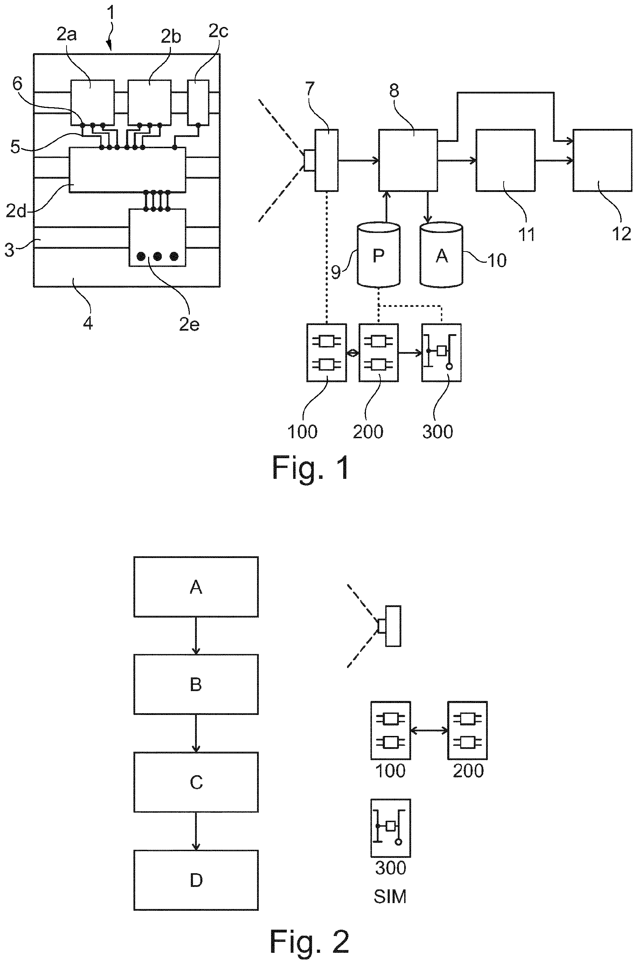

Gemäß Fig. 1 ist nach einer im Zuge des Herstellungsprozesses durchgeführten Montage ein Schaltschrank 1 zu prüfen, dessen Schaltschrankinhalt verschiedene gerätetechnische Komponenten 2a bis 2e enthält, welche via Hutschienen 3 auf einer Montageplatte 4 des Schaltschranks 1 befestigt sind und über unterschiedliche elektrische Leitungen 5 (exemplarisch) miteinander verdrahtet sind. Hierzu weist jede Komponente 2a bis 2e entsprechende Klemmanschlüsse 6 (exemplarisch) auf, welche als Schraub- oder Steckklemmmittel ausgebildet sind.

Zum Prüfen des Schaltschrankinhalts ist dem Schaltschrank 1 eine beabstandet hierzu angeordnete und auf die Montageplatte 4 ausgerichtete Kameraeinheit 7 zugeordnet, welche ein dreidimensionales Abbild der auf der Montageplatte 4 vollständig montierten und verdrahteten Komponenten 2a bis 2e erzeugt. Eine der Kameraeinheit 7 nachgeschaltete Auswerteeinheit 8 führt einen bildverarbeitungstechnischen Vergleich zwischen einem von der Kameraeinheit 7 aufgenommenen Abbildungslayout 100 des IST-Zustandes des Schaltschrankinhalts mit einem von einem computergestützten Planungstool bereitgestellten Planungslayout 200 des SOLL-Zustands durch.

Dieser Vergleich erfolgt mittels eines Bildauswertungsalgorithmus, welcher nicht allein das Planungslayout 200 aus einer Planungsdatenbank 9 ausliest, sondern auch die dazugehörigen Stücklisteninformationen. Auf dieser Basis erfolgt eine Prüfung hinsichtlich einer Vollständigkeit und Lage der verbauten Komponenten 2a bis 2e, einer Belegung der elektrischen Klemmanschlüsse 6, der Verdrahtungsverläufe der elektrischen Leitungen 5 sowie auch einer Richtigkeit der hierfür verwendeten Drahtarten anhand von auf den elektrischen Leitungen 5 vorhandenen Kennmerkmalen, welche der bildtechnischen Auswertung zugänglich sind. Der Bildauswertealgorithmus basiert auf einem nach dem sogenannten Bestmapping-Verfahren arbeitenden neuronalen System. Da alle zu verbauenden Komponenten aus der vorausgegangenen Planung bekannt sind, ist das neuronale System beispielsweise anhand geometrischer Kriterien in der Lage festzustellen, ob die richtige Komponente tatsächlich montiert ist.

Das von der Auswerteeinheit 8 erzeugte Prüfungsergebnis wird einer dieser nachgeschalteten Ausgabeeinheit 11 zur Verfügung gestellt, welche eine Informationsschnittstelle zum Benutzer in Form einer Bildschirmanzeige darstellt. Hierüber erhält der Benutzer die Information, ob der geprüfte Schaltschrank 1 zur Lieferung freigegeben werden kann oder einer Fehlerbehebung bedarf.

Die Auswerteeinheit 8 prüft neben der baulichen Konsistenz des Schaltschranks 1 auch dessen funktionale Konsistenz durch Abgleich der von den Komponenten 2a bis 2e und deren Verdrahtung entstehende Funktionalität mit einem dem Planungslayout 200 zugeordneten elektrischen Schaltplan 300. Nach positiver baulicher und funktionaler Prüfung wird durch eine mit der Auswerteeinheit 8 verbundenen Simulationseinheit 12 auch eine Simulation verschiedener Betriebszustände des Schaltschranks 1 über einen vordefinierten Zeitraum durchgeführt, um beispielsweise das Temperaturverhalten gegenüber einer entsprechenden Planungsvorgabe simulationstechnisch zu testen.

Gemäß Fig. 2 erfolgt das mit der vorstehend beschriebenen Einrichtung durchgeführte Prüfverfahren des Schaltschrankinhalts, in dem nach abgeschlossener planungsbasierter Montage in einem ersten Schritt A zunächst eine Bilderfassung des Schaltschrankinhalts durchgeführt wird. In einem zweiten Schritt B erfolgt ein Vergleich des bildtechnisch erfassten Abbildungslayouts 100 über den IST-Zustand des montierten Schaltschrankinhalts mit dem bereitgestellten Planungslayout 200 des SOLL-Zustands. Im darauffolgenden dritten Schritt C wird neben der baulichen Konsistenz des Schaltschrankinhalts auch eine funktionale Konsistenz unter Rückgriff auf den mit dem Planungslayout 200 verknüpften elektrischen Schaltplan 300 geprüft. Entspricht der IST-Zustand des Schaltschrankinhalts, welcher über dessen Komponenten und deren Verdrahtung gekennzeichnet ist, auch den schaltplanmäßigen Vorgaben, so ist davon auszugehen, dass die funktionale Konsistenz des Schaltschranks 1 vorliegt. In einem vierten Schritt D werden darauf aufbauend und darüber hinaus auch verschiedene Betriebszustände über einen vordefinierten Zeitraum, beispielsweise 24 Stunden, im Rahmen einer Simulation getestet. So lässt sich beispielsweise herausfinden, ob der Schaltschrankinhalt hinsichtlich der Temperaturentwicklung oder der Leistungsaufnahme den thermischen Grenzwerten beziehungsweise den Stromverbrauchsvorgaben entspricht.

Die erfindungsgemäße Lösung gewährleistet also eine mehrschichtige tiefgreifende automatisierte Qualitätsprüfung eines montierten Schaltschranks, welche nicht allein auf die vorstehend exemplarisch beschriebenen Aspekte beschränkt ist, sondern im Rahmen der nachfolgenden Ansprüche auch andere Abwandlungen ermöglicht. Beispielsweise kann auch die Richtigkeit des gewählten Schaltschranktyps als Gehäuse für den auf der Montageplatte ausgeführten Komponentenaufbau geprüft werden.

### Bezugszeichenliste

- 1: Schaltschrank
- 2: Komponente
- 3: Hutschiene
- 4: Montageplatte
- 5: elektrische Leitung
- 6: Klemmanschluss
- 7: Kameraeinheit
- 8: Auswerteeinheit
- 9: Planungsdatenbank
- 10: Archivdatenbank
- 11: Ausgabeeinheit
- 12: Simulationseinheit

- 100: Abbildlayout
- 200: Planungslayout
- 300: elektrischer Schaltplan

## Patentansprüche

1. Einrichtung zum Prüfen eines Schaltschrankinhalts nach planungsbasierter Montage von gerätetechnischen Komponenten (2a - 2e) sowie deren Verdrahtung über hierfür vorgesehene Klemmanschlüsse (6) mittels gekennzeichneter elektrischer Leitungen (5), umfassend:
- eine Kameraeinheit (7) zur zumindest zweidimensionalen Bilderfassung der auf einer Montageplatte (4) eines Schaltschranks (1) vollständig montierten und verdrahteten Komponenten (2a - 2e),
- eine Auswerteeinheit (8) zur Durchführung eines Vergleichs zwischen einem auf der bildtechnischen Erfassung basierenden Abbildlayout (100) des IST-Zustandes mit einem bereitgestellten Planungslayout (200) des SOLL-Zustandes, zumindest hinsichtlich:
a) einer Vollständigkeit und Lage der verbauten Komponenten (2a - 2e),
b) der Belegung elektrischer Klemmanschlüsse (6),
c) der Verdrahtungsverläufe der elektrischen Leitungen (5),
- eine Ausgabeeinheit (11) zur Bereitstellung des Prüfungsergebnisses über die bauliche Konsistenz des Schaltschranks (1) für eine Beurteilung hinsichtlich Lieferfreigabe oder Fehlerbehebung,
**dadurch gekennzeichnet, dass** die Auswerteeinheit (8) konfiguriert ist, neben der baulichen Konsistenz des Schaltschranks (1) auch die funktionale Konsistenz durch Abgleich der von den Komponenten (2a - 2e) und deren Verbindung über die elektrischen Leitungen (5) entstehende Funktionalität mit einem dem Planungslayout (200) zugeordnetem elektrischen Schaltplan (300) zu prüfen, und dass eine Simulationseinheit (12) vorgesehen ist, welche konfiguriert ist auf Basis einer positiven baulichen und funktionalen Prüfung eine Simulation verschiedener Betriebszustände des Schaltschranks (1) über einen vordefinierten Zeitraum durchzuführen.

2. Einrichtung nach Anspruch 1, **dadurch gekennzeichnet, dass** die Auswerteeinheit (8) femer konfiguriert ist den Vergleich des IST-Zustandes mit dem SOLL-Zustand durchzuführen hinsichtlich
d) Größe und Typ des gewählten Schaltschranks (1), und/oder
e) einer Richtigkeit der verwendeten Drahtarten der elektrischen Leitungen (5).

3. Einrichtung nach Anspruch 1,
**dadurch gekennzeichnet, dass** die Auswerteeinheit (8) optische Filtermittel zur graphischen Abstraktion des per Kameraeinheit (7) erfassten Abbildes des Layouts umfasst, um ein dem Abstraktionsgrad des Planungslayouts (200) entsprechendes Abbildlayout (100) zu Vergleichszwecken zu erzeugen.

4. Einrichtung nach Anspruch 1,
**dadurch gekennzeichnet, dass** die Kameraeinheit (7) konfiguriert ist ein dreidimensionales Abbild zu erstellen, um die Höhenlage der Komponenten (2a - 2e) und Klemmanschlüsse (6) zu erfassen und bei der Prüfung gegenüber einem 3D-Planungslayout zu berücksichtigen.

5. Einrichtung nach Anspruch 1,
**dadurch gekennzeichnet, dass** die gerätetechnischen Komponenten (2a - 2e) als elektrische und/oder elektronische Einbaumodule ausgebildet sind.

6. Computergestütztes Verfahren zum Prüfen eines Schaltschrankinhalts nach vorausgegangener planungsbasierter Montage von gerätetechnischen Komponenten (2a - 2e) sowie deren Verdrahtung über hierfür vorgesehene Klemmanschlüsse (6) mittels gekennzeichneter elektrischer Leitungen (5), umfassend die Schritte:
- Bilderfassung der auf einer Montageplatte (4) eines Schaltschranks (1) vollständig montierten und verdrahteten Komponenten (2a - 2e) über eine Kameraeinheit (7),
- Durchführung eines Vergleichs zwischen einem auf der bildtechnischen Erfassung basierenden Abbildlayouts (100) des IST-Zustandes mit einem bereitgestellten Planungslayout (200) des SOLL-Zustandes mittels einer Auswerteeinheit (8), zumindest hinsichtlich:
a) einer Vollständigkeit der verbauten Komponenten (2a - 2e),
b) der Belegung elektrischer Klemmanschlüsse (6),
c) der Verdrahtungsverläufe der elektrischen Leitungen (5),
- Bereitstellung des Prüfungsergebnisses über die bauliche Konsistenz des Schaltschranks (1) für eine Beurteilung hinsichtlich Lieferfreigabe oder Fehlerbehebung durch eine Ausgabeeinheit (11),
**dadurch gekennzeichnet, dass** neben der baulichen Konsistenz des Schaltschranks (1) auch die funktionale Konsistenz durch Abgleich der von den Komponenten (2a - 2e) und deren Verbindung über die elektrischen Leitungen (5) entstehende Funktionalität mit einem dem Planungslayout (200) zugeordnetem elektrischen Schaltplan (300) geprüft wird,
und dass auf Basis einer positiven baulichen und funktionalen Prüfung eine Simulation verschiedener Betriebszustände des Schaltschranks (1) über einen vordefinierten Zeitraum durchgeführt wird.

7. Computergestütztes Verfahren nach Anspruch 6,
**dadurch gekennzeichnet, dass** der Vergleich des IST-Zustandes mit dem SOLL-Zustand ferner durchgeführt wird hinsichtlich:
d) Größe und Typ des gewählten Schaltschranks (1), und/oder
e) einer Richtigkeit der verwendeten Drahtarten der elektrischen Leitungen (5).

8. Computergestütztes Verfahren nach Anspruch 6,
**dadurch gekennzeichnet, dass** das Planungslayout (200) von einem softwaregesteuerten Konstruktionstool in Form einer Layoutdatei mit zweidimensionaler oder dreidimensionaler Darstellungsform bereitgestellt wird.

9. Computergestütztes Verfahren nach Anspruch 6,
**dadurch gekennzeichnet, dass** der Vergleich des IST-Zustandes gegenüber dem SOLL-Zustand unter Berücksichtigung von zulässigen Toleranzbereichen hinsichtlich der verbauten Komponenten (2a - 2e), der verwendeten elektrischen Leitungen (5) und/oder deren Einbau- bzw. Verlaufspositionen durchgeführt wird.

10. Computergestütztes Verfahren nach Anspruch 6,
**dadurch gekennzeichnet, dass** das Prüfungsergebnis über die zumindest bauliche Konsistenz des Schaltschranks (1) in eine Archivdatenbank (10) zu Führung einer elektronischen Schaltschrankmappe für den nach erfolgter Montage geprüften Schaltschrank (1) überspielt wird.

11. Computerprogrammprodukt mit Programmcodemitteln zur Durchführung des Verfahrens nach einem der Ansprüche 6 bis 10, wenn das Computerprogrammprodukt auf einer Auswerteeinheit (8) einer Einrichtung nach einem der Ansprüche 1 bis 5 abläuft.

## Claims

1. Device for testing the contents of a switch cabinet after the planning-based assembly of technical equipment components (2a - 2e) and their wiring via terminal connections (6) provided for this purpose by means of marked electrical lines (5), comprising:
- a camera unit (7) for at least two-dimensional image acquisition of the components (2a
- 2e) completely mounted and wired on a mounting plate (4) of a switch cabinet (1),
- an evaluation unit (8) for carrying out a comparison between an image layout (100) of the actual state based on the image acquisition with a provided planning layout (200) of the target state, at least with regard to:
a) a completeness and location of the installed components (2a - 2e),
b) the assignment of electrical terminal connections (6),
c) the wiring courses of the electrical lines (5),
- an output unit (11) for providing the test result on the structural consistency of the switch cabinet (1) for an assessment with regard to delivery release or fault rectification, **characterised in that** the evaluation unit (8) is configured to check not only the structural consistency of the switch cabinet (1) but also the functional consistency by comparing the functionality produced by the components (2a - 2e) and their connection via the electrical lines (5) with an electrical circuit diagram (300) associated with the planning layout (200), and **in that** a simulation unit (12) is provided which is configured to perform a simulation of various operating states of the switch cabinet (1) over a predefined period of time on the basis of a positive structural and functional test.

2. Device according to claim 1,
**characterised in that** the evaluation unit (8) is further configured to carry out the comparison of the actual state with the target state with regard to:
d) size and type of the selected control cabinet (1), and/or
(e) a correctness of the types of wires used in the electrical conductors (5).

3. Device according to claim 1,
**characterised in that** the evaluation unit (8) comprises optical filter means for graphically abstracting the image of the layout captured by the camera unit (7) in order to generate an image layout (100) corresponding to the degree of abstraction of the planning layout (200) for comparison purposes.

4. Device according to claim 1,
**characterised in that** the camera unit (7) is configured to produce a three-dimensional image to detect the elevation of the components (2a - 2e) and clamp connections (6) and to take this into account when checking against a 3D planning layout.

5. Device according to claim 1,
**characterised in that** the technical equipment components (2a - 2e) are designed as electrical and/or electronic built-in modules.

6. Computer-aided method for testing the contents of a switch cabinet after the preceding planning-based assembly of technical equipment components (2a - 2e) and their wiring via terminal connections (6) provided for this purpose by means of marked electrical lines (5), comprising the steps:
- image acquisition of the components (2a - 2e) completely mounted and wired on a mounting plate (4) of a control cabinet (1) by means of a camera unit (7),
- execution of a comparison between an image layout (100) of the actual state based on the image acquisition with a provided planning layout (200) of the target state by means of an evaluation unit (8), at least with regard to the image acquisition:
a) a completeness of the installed components (2a - 2e),
b) the assignment of electrical terminal connections (6),
c) the wiring courses of the electrical lines (5),
- providing the test result on the structural consistency of the control cabinet (1) for an assessment with regard to delivery release or fault rectification by an output unit (11), **characterised in that**, in addition to the structural consistency of the switch cabinet (1), the functional consistency is also checked by matching the functionality arising from the components (2a - 2e) and their connection via the electrical lines (5) with an electrical circuit diagram (300) associated with the planning layout (200),
and **in that**, on the basis of a positive structural and functional test, a simulation of various operating states of the switch cabinet (1) is carried out over a predefined period of time.

7. Computer-assisted method according to claim 6,
**characterised in that** the comparison of the actual state with the target state is further carried out with regard to:
d) size and type of the selected switch cabinet (1), and/or
(e) a correctness of the types of wires used in the electrical conductors (5).

8. Computer-assisted method according to claim 6,
**characterised in that** the planning layout (200) is provided by a software-controlled design tool in the form of a layout file with a two-dimensional or three-dimensional representation form.

9. Computer-assisted method according to claim 6,
**characterised in that** the comparison of the actual state with the target state is carried out taking into account permissible tolerance ranges with regard to the installed components (2a - 2e), the electrical lines (5) used and/or their installation or routing positions.

10. Computer-assisted method according to claim 6,
**characterised in that** the test result is transferred via the at least structural consistency of the switch cabinet (1) into an archive database (10) for maintaining an electronic switch cabinet folder for the switch cabinet (1) tested after assembly.

11. A computer program product comprising program code means for carrying out the method according to any one of claims 6 to 10, when the computer program product runs on an evaluation unit (8) of a device according to any one of claims 1 to 5.

## Revendications

1. Dispositif destiné à vérifier le contenu d'une armoire de distribution après un montage planifié de composants d'appareillage (2a - 2e) ainsi que leur câblage via des bornes de serrage (6) prévues à cet effet, au moyen de lignes électriques caractérisées (5), comportant :
- une unité de caméra (7) pour l'acquisition d'images au moins bidimensionnelles des composants (2a - 2e) câblés et entièrement montés sur une plaque de montage (4) d'une armoire de distribution (1),
- une unité d'analyse (8) pour la réalisation d'une comparaison entre une topologie à base d'images (100) de l'état actuel reposant sur l'acquisition d'images, avec une topologie planifiée (200) fournie de l'état souhaité, concernant au moins :
a) l'exhaustivité et la position des composants (2a - 2e) montés,
b) la disposition des bornes de serrage électriques (6),
c) le cheminement du câblage des lignes électriques (5),
- une unité de sortie (11) pour la fourniture du résultat de la vérification concernant la cohérence structurelle de l'armoire de distribution (1) en vue d'une évaluation concernant la validation de la livraison ou la détection de défauts,
**caractérisé en ce que** l'unité d'analyse (8) est configurée pour vérifier également, en plus de la cohérence structurelle de l'armoire de distribution (1), la cohérence fonctionnelle en comparant la fonctionnalité obtenue à partir des composants (2a - 2e) et de leur connexion via les lignes électriques (5), avec un schéma de distribution électrique (300) associé à la topologie planifiée (200),
et **en ce qu'**est prévue une unité de simulation (12) configurée pour effectuer, sur la base d'une vérification structurelle et fonctionnelle positive, une simulation de différents états de fonctionnement de l'armoire de distribution (1) sur un laps de temps prédéfini.

2. Dispositif selon la revendication 1,
**caractérisé en ce que** l'unité d'évaluation (8) est en outre configurée pour effectuer la comparaison de l'état actuel avec l'état souhaité, pour ce qui concerne :
d) la taille et le type de l'armoire de distribution (1) sélectionnée, et/ou
e) l'exactitude des types de fil utilisés pour les lignes électriques (5).

3. Dispositif selon la revendication 1,
**caractérisé en ce que** l'unité d'analyse (8) comporte des moyens de filtrage optique pour l'abstraction graphique de l'image de la topologie acquise par l'unité de caméra (7), afin de générer une topologie à base d'images (100) correspondant au niveau d'abstraction de la topologie planifiée (200).

4. Dispositif selon la revendication 1,
**caractérisé en ce que** l'unité de caméra (7) est configurée pour générer une image tridimensionnelle, afin de déterminer la position en hauteur des composants (2a - 2e) et des bornes de serrage (6) et d'en tenir compte lors de la vérification par rapport à une topologie planifiée en 3D.

5. Dispositif selon la revendication 1,
**caractérisé en ce que** les composants d'appareillage (2a - 2e) sont réalisés sous forme de modules intégrés électriques et/ou électroniques.

6. Procédé assisté par ordinateur pour vérifier le contenu d'une armoire de distribution après un montage planifié précédent de composants d'appareillage (2a - 2e) ainsi que leur câblage via des bornes de serrage (6) prévues à cet effet, au moyen de lignes électriques caractérisées (5), comportant les étapes consistant à :
- acquérir, par l'intermédiaire d'une unité de caméra (7), une image de composants (2a - 2e) câblés et entièrement montés sur une plaque de montage (4) d'une armoire de distribution (1),
- effectuer, au moyen d'une unité d'analyse (8), une comparaison entre une topologie à base d'images (100) de l'état actuel reposant sur l'acquisition d'images, avec une topologie planifiée (200) fournie de l'état souhaité, concernant au moins :
a) l'exhaustivité des composants (2a - 2e) montés,
b) la disposition des bornes de serrage électriques (6),
c) le cheminement du câblage des lignes électriques (5),
- fournir, par l'intermédiaire d'une unité de sortie (11), le résultat de la vérification concernant la cohérence structurelle de l'armoire de distribution (1) en vue d'une évaluation concernant la validation de la livraison ou la détection de défauts,
**caractérisé en ce qu'**en plus de la cohérence structurelle de l'armoire de distribution (1), la cohérence fonctionnelle est également vérifiée en comparant la fonctionnalité obtenue à partir des composants (2a - 2e) et de leur connexion via les lignes électriques (5) avec un schéma de distribution électrique (300) associé à la topologie planifiée (200), et **en ce que** sur la base d'une vérification structurelle et fonctionnelle positive, une simulation de différents états de fonctionnement de l'armoire de distribution (1) est réalisée sur un laps de temps prédéfini.

7. Procédé assisté par ordinateur selon la revendication 6,
**caractérisé en ce que** la comparaison de l'état actuel avec l'état souhaité est en outre réalisée pour ce qui concerne :
d) la taille et le type de l'armoire de distribution (1) sélectionnée, et/ou
e) l'exactitude des types de fil utilisés pour les lignes électriques (5).

8. Procédé assisté par ordinateur selon la revendication 6,
**caractérisé en ce que** la topologie planifiée (200) est fournie par un outil de construction logiciel sous la forme d'un fichier de topologie avec une forme de représentation bidimensionnelle ou tridimensionnelle.

9. Procédé assisté par ordinateur selon la revendication 6,
**caractérisé en ce que** la comparaison de l'état actuel par rapport à l'état souhaité est effectuée en tenant compte de plages de tolérance admissibles concernant les composants (2a - 2e) montés des lignes électriques (5) utilisées et/ou de leurs positions de montage ou de cheminement.

10. Procédé assisté par ordinateur selon la revendication 6,
**caractérisé en ce que** le résultat de la vérification concernant la au moins une cohérence structurelle de l'armoire de distribution (1) est copié dans une base de données d'archivage (10) pour établir une carte d'armoire de distribution électronique pour l'armoire de distribution (1) vérifiée après un montage réussi.

11. Produit de programme informatique ayant des moyens de code de programme pour mettre en œuvre le procédé selon l'une des revendications 6 à 10, lorsque le produit de programme informatique est exécuté sur une unité d'analyse (8) d'un dispositif selon l'une des revendications 1 à 5.
